Europäisches Patentamt

European Patent Office

Office européen des brevets

(11) Publication number: **0 143 088**
**B1**

## EUROPEAN PATENT SPECIFICATION

(45) Date of publication of patent specification: **29.11.89**

(51) Int. Cl.⁴: **G 05 D 23/19,** G 05 B 13/00

(21) Application number: **84850165.6**

(22) Date of filing: **29.05.84**

(54) An arrangement for execution of a control procedure, especially for suppressing disturbing influences.

(30) Priority: **28.09.83 SE 8305248**

(43) Date of publication of application:
**29.05.85 Bulletin 85/22**

(45) Publication of the grant of the patent:
**29.11.89 Bulletin 89/48**

(84) Designated Contracting States:
**DE NL SE**

(56) References cited:
DE-A-2 256 457
GB-A-1 361 212
US-A-4 195 337

"Operational Amplifiers, Design and
Applications", 1971, pages 455-457, editors:
J.G. Graeme,G.E. Tobey, L.P. Huelsman,
published by McGraw-Hill International Book
Company, New York, US.

(73) Proprietor: **TOUR & ANDERSSON AKTIEBOLAG**
**Svärdlängsvägen 46**
**S-121 72 Johanneshov (SE)**

(72) Inventor: **Seidlitz, Joachim**
**Torögatan 24**
**122 39 Enskede (SE)**

(74) Representative: **Siebmanns, Hubertus et al**
**Götalands Patentbyra AB Egnahemsvägen 2**
**S-561 35 Huskvarna (SE)**

## Description

Most technical control procedures have for their purpose to cause a given way of operation of some arrangement, system, machine or the like. Thereby, it is assumed, that this operation will vary in a way more or less out of control and that control means should be made either for keeping the operation at a constant value or to have it to vary according to a program, previously set. The first mentioned will be the most usual. Below, the constant value or the value varying according to a given program will be called the "the set value" of the operation.

Even if the control of this set value is made in such a way that it is expected to be maintained, the control will nevertheless be disturbed by two different circumstances. First, when it tries to correct the error value so that the control will reach the set value very slowly, and this may in many a case mean an essential disadvantage. Second, during the run of the correction procedure outside influences, often called disturbing influences" or simply "disturbances", will influence the planned and intended control. Therefore, this will run too slowly, in part and in addition not run in the intended way.

Below, a couple of typical examples shall be mentioned:

In systems for feeding warm water to a tap-off system, for instance in a domestic house, it has been usual to supply from a heat exchanger fed with hot water from a boiler, warm water to a tubing system, comprising a number of tap-off places. One or more feeder conduits from a cold water network are connected to this tubing, so that successively, when warm water is tapped off cold water will be supplied to the system but this will cool down the warm water in the distribution circuit. Hitherto, one has usually expected that by the action of the heat exchanger warm water will be created by heat transferred from the hot water on the primary side of the heat exchanger, but this heat transfer usually takes place rather slowly and an inconveniently long period of time will lapse until the water in the distribution circuit to the tap-off places has again assumed the desired temperature, which is, in this case, the set value. If the warm water supply conduit is subjected to a tap-off of constant and moderate speed of movement, which is also preferably continuous, then the operation for feeding heat from the hot water boiler and through the heat exchanger would follow a give program easily stated. Unfortunately, however, one cannot count on this, but the tap-off will instead usually last for short periods of time and, thereby, not even have a constant rate but a very variable rate, and the time during which the tap-off takes place, may vary considerably.

These circumstances cause such disturbances as mentioned above.

Another, however less important disturbance is created from the boiler from which the hot water is fed to the heat exchanger requiring some time for re-heating the water to the value indicated by the boiler thermostat, and this time will also be variable to some extent dependent upon if the water in the tap-off conduit has been strongly cooled or only cooled to a small extent, as well upon the speed of its cooling.

Another example may be mentioned:

Nowadays one uses to a great extent so called air-conditioning systems for maintaining or creating, respectively, a given agreeable temperature in the intekior of a building. If this temperature should rise or sink, the air-conditioning system will operate to restore it to the set value. In some cases, it is already known how the mathematical function is shaped indicating the relation between the heat fed and the existing need for feeding heat. In other cases, one may easily on experimental basis state this function as it would exist under normal strady circumstances. Firstly, however, the correction of the temperature in the building to its preference value will take place rather slowly, and, second, also in this case there will exist disturbances changing the functional relations, for instance if a window is openned in the room in which the temperature is sensed and cold outside air is let in so that rapid cooling of the air will occur, which is indicated for compensation to the set value, or if a mechanical device is operated in the same room which will, by the heat given off, change the said functional relation. Many other circumstances also may act as disturbances. Amongst them should be mentioned the outdoor temperature, because at lower outdoor temperatures the heating will take place more slowly, also the existing wind pressure on the outside of the building because a cooling effect will occur at strong wind pressures. Further the humidity of the air, the mass of solid constituents in the building, prevailing heat from sun shine directed onto the building and must more will have an influence.

The present invention concerns an arrangement intended to do away with at least the first mentioned inconvenience but preferably with both of the above mentioned inconveniences, which means that by the arrangement according to the present invention the course of control can be accelerated, but, preferably, in addition thereto, this course of control shall be able to follow a function known in advance, taking regard to the functions of such disturbing circumstances, examples for which having been mentioned above.

Thus, the invention concerns an arrangement for the execution of a control for giving a magnitude sensed by one or more sensors a constant course or a course varying according to a predetermined rule, below referred to as the "set value", said control taking place under influence of means having a known transfer function.

According to the invention there is provided a control system for ensuring a sensed parameter is maintained at a constant value, or varies in accordance with a predetermined rule, comprising control means to control the value of said parameter, the control means having a known transfer function, and a sensor providing an output related to the sensed parameter, the sensor supplying electric signals to an amplifier forming part of the control system, the control system being characterised in that the amplifier consists of one or more amplifier stages each having an inverting and a non-inverting input with a respective feedback network connected to the non-inverting input of each amplifier stage from the output of that amplifier stage, the feedback network comprising a filter arranged to give an overall transfer function through the amplifier that is the inverse of the transfer function of the control means.

Of course, the invention is not limited to the two possibilities of use mentioned above, but it may be used in a very great number of control procedures of the most different types.

As a preferred example, the use of the invention will be described below in the first mentioned case of controlling the warm water temperature in a warm water distribution conduit fed from a heat exchanger said heat exchanger being fed in one way or another on its primary side with. heat, usually by its primary side getting hot water from a boiler.

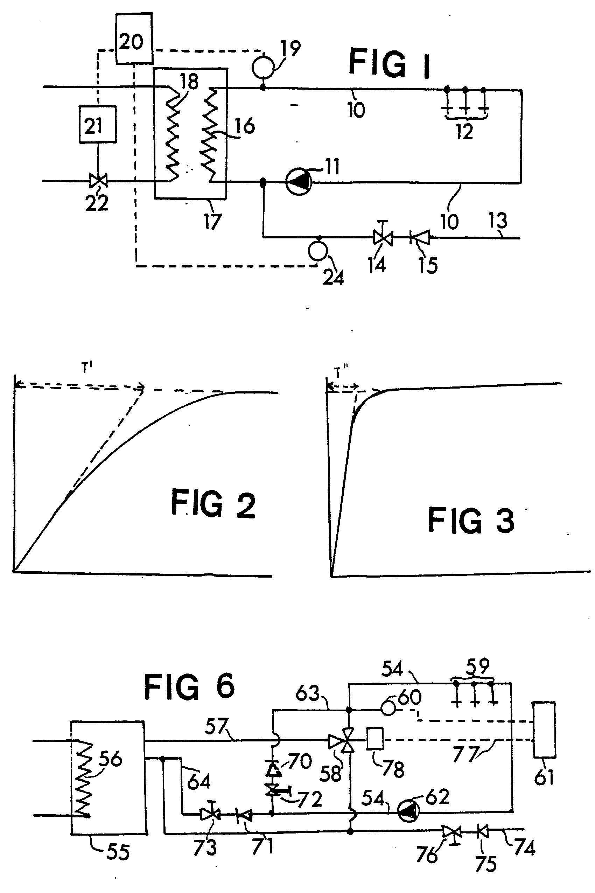

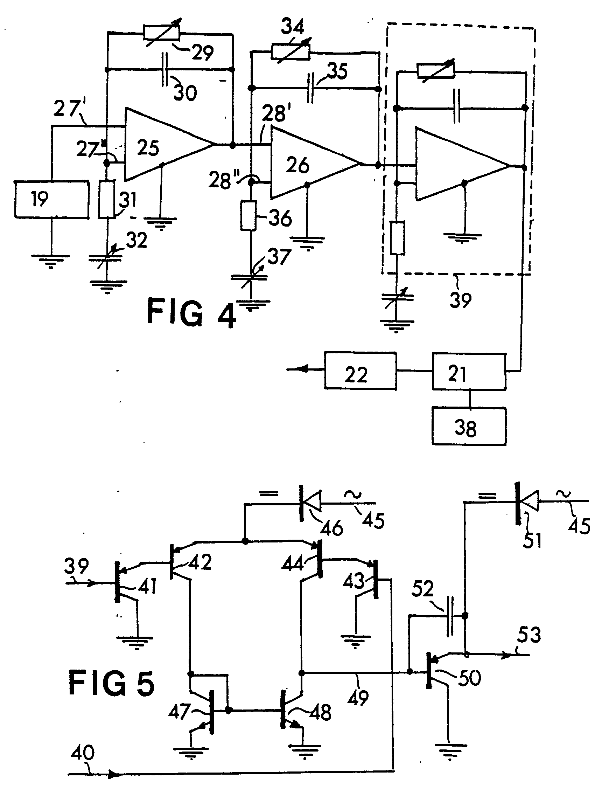

Thereby, the invention will be further explained in connection to the attached drawings in which Fig. 1 shows a schematical picture of a very simple such warm water distribution conduit, Fig. 2 and 3 show a couple of diagrams for explaining the operation of the invention, Fig. 4 shows a diagram in very simplified form of the arrangement for solving the problem forming basis of the invention, and Fig. 5 shows a wiring diagram of an amplifier contained in the arrangement according to Fig. 4. Fig. 6, finally, shows a diagram of a more advanced system for same purpose, mainly corresponding to the way of explanation in Fig. 1.

The invention, however, is neither limited to the specific uses or to the specific arrangements thus described as examples, but all different kinds of modifications may be made within the frame of the invention.

In Fig. 1, the warm water distribution conduit is indicated by 10. It is in a way known *per se* arranged as a closed loop in which the warm water is kept circulating by means of a pump 11. A number of tap off places 12 are schematically indicated. For replacing the tapped off water the loop 10 is connected by means of the conduit 13 to a water distribution network. In the usual way, there is included in the conduit 13 firstly a shut off valve 14 and secondly a back valve 15, but they have, of course, no decisive importance for the present invention. The loop 10, finally, runs through the secondary 16 of a heat exchanger 17 the primary 18 of which is fed by hot water. Of course, the primary 18 may be replaced by some other suitable source for feeding heat to the warm water distribution loop 10.

So far the invention is earlier known.

Now, it is obvious that if water is tapped off at anyone of the tap off places 12, then warm water will be removed from the loop 10 and for replacing this warm water cold water will be fed through the conduit 13, and there will be a cooling of the water in the loop 10. A heat exchanger of the type shown at 17 will normally work the way that a constant but weak transfer of heat will take place from the primary 18 to the secondary 16 to compensate for the loss of heat which cannot be avoided due to the heat being lost from the conduit 10 to the surroundings, e.g. the walls of the house and so on, even when no tap off takes place, and a stationary thermodynamic state of balance will therefore exist. When warm water is tapped off so that the temperature of the water in the loop 10 inclusive of the secondary 16 of the heat exchanger 17 sinks, the difference of temperature between the primary and the secondary of the heat exchanger 17 will increase, and more heat is transferred from the primary to the secondary, until the state of balance is again restored.

Different heat exchangers have different transfer functions for heat. With "transfer function" in this case is understood the mathematical relation $T=f'(t)$ for transfer of heat in which $T$ is the temperature in the heat exchanger secondary and $t$ is the time. Therefore, no common rule can be given for the heat transfer common to all such heat exchangers, but this may easily be stated for each separate type of heat exchanger or still better for each separate system, and one may thereafter set up a program according to which one accelerates transfer of heat so that the stationary state will be achieved quicker than would have been the case in the traditional arrangement said above to be known. The transfer function corresponding to this program, however, is influenced by the speed of the tap off and/or the amount of water tapped off and by other circumstances.

For this purpose, one introduces in some place demonstrative to the warm water distribution conduit 10, preferably immediately after its exit from the heat exchanger 17, a sensor means 19 which senses the existing temperature and transforms the indication into an electric current or voltage signal, distinctly indicating the temperature of the warm water at the place concerned in the warm water conduit 10. Also this sensor means has a transfer function $E=f''(T, t)$, in which $E$ is, for instance, an electric voltage. The two mathematic functions $f'$ and $f''$, most probably, are not identical. The sensor 19 is connected to a device 20 in which the voltage or current signal is treated in accordance with the program which has, in advance, been set up for the transfer of heat in the heat exchanger 17. In this treated form, incitement to the correction is transferred to a controller 21 mechanically influencing a valve 22 and/or electrically influencing a pump (not shown in the drawing) or in other way taking care of a quicker feed of heat carrier medium and/or feed of heat carrier medium of a higher temperature to the primary of the heat exchanger 17.

In a way, which will be evident from the following, the apparatus 20 is programmed to create a transfer function which, as to its general character as closely as possible agrees with the inverted form of the transfer functions of the heat exchanger 17 and of the sensor 19. Thereby it should be observed that the invention is not limited to the specifically described embodiment according to Fig. 1, but that it may also be used in many other cases, and that the said transfer functions may assume the most different forms so that no general form can be stated for them for common use, but one will have either to know in advance the transfer functions or in some suitable way experimentally or by earlier measurements to state the transfer functions. One example for means for this purpose will be given in the following in connection with the description of the device 20.

Thus, the device 20 is configured in such a way that it will register tendencies in the sensor 19, and, guided by them, anticipate the deviation from the set value, said anticipation being transferred to the controller 21, such that the transfer of heat will take place essentially quicker than would have been the case, if there had been no arrangement of sensor 19, device 20, controller 21 and valve 22. In such a case, as a matter of fact, the transfer of heat would have been controlled exclusively by the difference between the temperature, sensed by the sensor, and the preference value, as described above. With other words, one could say that one has knowing the transfer function made an anticipation and introduced the inverse form of the transfer function into the system whereby one has got the result that the correction of the temperature took place essentially quicker. It is without decisive importance to the invention in what way this quicker correction has been created. For instance, it may as shown in Fig. 1 be provided by opening a larger through let area in a valve but it may instead or in addition thereto be provided by increasing the power of a pump and/or by increasing the temperature of the hot water fed to the primary of the heat exchanger or in any deliberate other way. The choice of such a way will be within the usual knowledge of the man skilled in the art.

In this way, one has by means of the invention done away with the first mentioned disadvantage of too slow a correction of the temperature of the warm water by correction of the occurring drop of temperature in the warm water distribution loop, but one could not, by these means, do away with the other one of the said disadvantages, viz the influence of disturbances of one type or another, for instance the disturbance emanating from a difference in character of the transfer functions of the heat exchanger and the sensor.

As example of a disturbance, the irregular change of the temperature of the water in the loop 10 was mentioned, dependent upon if the tap off takes place with a high volume speed or with a low speed and dependent upon the duration of the tap off. The sensing of the quicker or slower decrease of the temperature of the water in the loop 10 may take place in many different ways. In the present case it takes place by using the temperature sensor means connected into the conduit 10, the indication of which in the form of an electric voltage or current signal is transferred to the device 20. If the temperature of the cold water does not vary too much one could instead of the said arrangement connect a means 24 in the cold water feeder conduit. This means 24 will indicate in the form of an electric current or voltage signal an adequate value of the feed of cold water which will, in turn, adequately indicate the decrease of temperature. This means 24 is connected to the device 20. The indication from the means 19 used or 24 or the like thereby will influence the transfer function in such a way that a compensation will be created for the disturbing influence concerned.

Thus, it is important for the invention that the general character of the transfer function of the heat exchanger 17 as well as the one of the disturbing influences of said transfer function is known. These influences, likewise, are called transfer functions. They may be of very different kind for different disturbing influences. In a way which will be apparent from the following, therefore, compensation has to be made separately for each of them.

Below, the compensation for one of the disturbing influences will be further clarified, viz. the one, caused by dissimilar shape of the transfer function of the sensor means 19. The further disturbances perhaps existing, of course, also should be compensated for, and thereby one will have, by measurement or be earlier experience to know the general character of the influence of said disturbing influences on the transfer function of the heat exchanger.

In Fig. 2 a curve is shown as an example of the transfer function of the heat exchanger 17. Along the vertical axis, the temperature of the water on the secondary side 16 of the heat exchanger 17 is plotted, for instance as it exists at the connection point of the sensor 19, and along the horizontal axis time is plotted at normal correction in a way known *per se*. In the preferred example, it has been assumed that the transfer function, as often is the case, will follow a curve of continuous change of the slope, so that one may construct a time constant T'.

The device 20 is of such a kind that it will create a control operation for the controller 21 by which the heat transfer will follow a curve indicated in Fig. 3 in which the time constant has been decreased from the value T' to the value T''. With some approximation one may assume that an observable decrease of the temperature of the warm water has occurred and that the correction of the temperature along the known principles would take place very slowly as evident from the curve according to Fig. 2. The change of the time constant T' of Fig. 2 into the time constant T'' of Fig. 3, then, could be said to be a re-shaping of the function in inverse shape according to which the decrease of the temperature initially took place. In the way mentioned above, this will cause a quicker compensation of the decrease of temperature of the water in the loop 10 perhaps existing. Further, however, the temperature transfer in the heat exchanger 17 will be influenced by disturbances, in the chosen example thus disturbances due to variably quick decrease of temperature, observed either by means of the sensor 19 or the sensor 24.

In Fig. 4, in schematical form, an arrangement is shown, which may be used for the purpose of the device 20. Principally, the arrangement according to Fig. 4 comprises two amplifiers 25 and 26, each being programmed *per se* to a transfer function, the one of them, e.g. the amplifier 25, to the transfer function of the heat exchanger 17, and the other one, e.g. the amplifier 26, to the transfer function of the sensor 19. These amplifiers are coupled with feedback in a way, which is known for instance from Graeme, Tobey and Huelsman, Operational Amplifiers, Design and Applications. MacGraw-Hill Book Company, 1971, pages 455—457, said amplifiers having two inputs 27′, 27″ and 28′, 28″ counteracting each other i.e. having inverting and non-inverting inputs. Here, first, the operation of the amplifier 25 will be described.

Thus, the indication from the sensor means, e.g. the sensor 19, is impressed onto the input circuit 27′, whereas a feedback circuit is connected to the input circuit 27″. The feedback circuit comprises a resistor 29 and a condenser 30 in parallel, but this, of course, only is to be regarded a chosen embodiment of a filter, comprising one of the means for providing the transfer function, the other means comprising, in the chosen example, a series connection of a resistor 31 and a condenser 32 provided between the input 27″ and ground. By adjustment of the resistance value of the resistor 29 and the capacitance of the condenser 32, one may create the inverse function of a great number of transfer function, existing in practice. The resistor 29 and the condenser 32 have been shown with the usual indication for adjustable means. However, the intention is that they should either be adjusted once for all to agree with a known transfer function or automatically be re-adjusted to agree with perhaps occurring indications from transmitter not shown in the drawing in the form of sensors or the like. The condenser 30 mainly acts as a decoupling condenser, and the resistor 31 mainly acts as a damper for occurring oscillations.

The shown arrangement, in which the inverse transfer function, see Figs. 2 and 3, of the heat exchanger has been simulated as to its general character by means of the resistor 29 and the condenser 32, will give a similarity which is acceptable in many a case, but if in one or more cases the transfer function should be essentially different, the man skilled in the art will know, on basis of his usual skill another construction of the filter satisfying the demand for similar shape with the inversed transfer function of other character.

As mentioned above, the amplifier 26 is intended to create compensation for the transfer function, shaped in another way, of the sensor 19. The resistor 34 of the amplifier 26 is connected in parallel with a condenser 35 to the input circuit 28″, and this is grounded via a series coupling of a resistor 36 and a condenser 37. As in the coupling of the amplifier 25, the transfer function of the amplifier 26 is determined, in first place, by the resistor 34 and the condenser 37, whereas the resistor 35 in first place forms a de-coupling condenser and the resistor 36 forms a damping resistor to prevent oscillation. By adjustment of the values of the combination of the resistor 34 and the condenser 37 one may provide a filter giving a transfer function of the amplifier 26, which will, as too its general character, be in accordance with the inversed relations of the transfer function of the sensor 19.

As in the arrangement according to the above mentioned literature reference, the feedback thus takes place to amplifiers having two inputs counteracting each other 27′, 27″ and 28′, 28″ respectively. As the heat exchanger 17 and the sensor 19 are assumed to have different transfer functions, one should provide separate amplifiers for them. Thereby, these amplifiers are reactively connected via filters causing an inverse imitation of the transfer functions concerned. In the embodiment described in connection with Fig. 4 it has been assumed that this limitation of the transfer functions concerned could be provided by means of simple filters comprising the resistor 29 and the condenser 32 or the resistor 34 and the condenser 37, respectively. This, however, should only be understood as a chosen example. Other transfer functions will require filters of a different type. In dimensioning the means taking care of the reaction past the amplifiers 25 and 26 and so on, of course, one will have to ensure in some way known *per se* that the feedback must not be so strong that self oscillation is created.

The output from the amplifier 26, in this case, is directly or indirectly connected to the controller 21, which receives a signal from the indicator of the set value 38 and controls the valve 22.

If there should exist several parts of the system, each having its own transfer function, between the means controlling the operation and the sensor means, one will have to connect in a way, shown in Fig. 4, further amplifiers 39 of same type as amplifier 26 along with the means pertaining thereto, especially the filter forming means, said filters, which may for instance comprise a resistor and a condenser although they may also be built up in some other way, should, of course, have suitable transfer functions to create the inverse imitations of the transfer functions of the parts concerned. The man skilled in the art will immediately understand how such a connection of further amplifiers will take place.

Operational amplifiers of the type appearing at 25 and 26 in Fig. 4 nowadays are made as standard articles, usually in a completely moulded in state, and they are available in open trade. When using the present invention one may use any deliberate one of these known operational amplifiers, provided that it has inverting and non-inverting inputs counteracting each other. One example for such an operational amplifier is shown in Fig. 5.

Thus, this operational amplifier has two input conduits 39 and 40, respectively, corresponding for instance to the two inputs 27', 27'' in Fig. 4. Each of the two input signals over the conduits 39 and 40 is amplified in the operational amplifier according to Fig. 5 by means of two transistors in cascade, viz. as far as regards the input conduit 39 the transistors 41 and 42 and as far as regards the input conduit 40 the transistors 43 and 44. They get common operational voltage from the mains conductor 45 past a rectifier 46. For stabilization of the two transistor groups 41—42 and 43—44, respectively, they are grounded via one transistor 47 and 48 respectively, each. The feedback voltage then will exist in amplified form in the conduit 49.

Usually, this voltage will scarcely be sufficiently strong to be used as control voltage for the controller 21, Fig. 1, and therefore it is further amplified in a transistor 50 getting its voltage from the mains 45 past the rectifier 51. The transistor 50 is by-passed by means of a decoupling condenser 52. The amplifier output voltage therefore will exist in the conduit 53.

In Fig. 6 an alternative embodiment of the arrangement according to Fig. 1 is shown. It is obvious that the invention shall not be limited to the specific embodiment shown in Fig. 1. However, it should be observed that the invention shall even not be limited to compensation of temperature in a system for delivery of warm water to tap-off places, but that it has an essentially more extensive possibility of use. One example of such a use has been mentioned in the pre-amble, viz. for controlling the feed of heat to a system for climatization of a building.

In the arrangement according to Fig. 6, warm water is collected to the warm water loop and the different tap off places from a water heater 55 with an electric heater winding or a hot water loop 56 fed from a boiler. The water heater comprises a tank of large volume. The output conduit 57 is connected to a three-way valve 58, the output of which is connected to the warm water loop 54 and its tap-off places 59. Near the output from the three-way valve 58 a sensor 60 for the temperature of the water in the conduit 54 is provided, and its indication circuit runs to an apparatus 61 corresponding to the device 20 in Fig. 1. The pump 62 takes care of circulation in the warm water loop 54. From the output side of the pump 62 a first conduit 63 runs to the input side of the warm water loop 54 at a place close to the connection place of the sensor 60, and a second conduit 64 runs to the water heater 55. In each of the two last mentioned conduits a back current valve 70 and 71, respectively as well as a shut off valve 72 and 73, respectively, is connected. The cold water conduit 74 connected to the cold water system, likewise comprises a back current valve 75 as well as a shut off valve 76.

As in the arrangement according to Fig. 1, the apparatus 61 may be influenced not only by the temperature in the warm water distribution conduit 54 but also by one or more indications of disturbing influences. From the apparatus 61 a conduit 77 runs to a motor 78 for adjustment of the three-way valve 58 so that this valve will at need for a restitution of the temperature of the warm water in the loop 54 be re-adjusted to feed a greater quantity of water heated in the water heater 55 via the conduit 57 or *vice versa*.

If there should be no temperature drop in the warm water distribution conduit 54, then the circulation would run from the place of connecting of the sensor means 60 and the conduit 63 past the tap off places 59 and through the pump 62, the shut off valve 72, the back current valve 70 and the branch conduit 63. In reality, however, even if no tap off of warm water should take place, there will be a smaller temperature drop due to heat leaking away to the surroundings, for instance to the walls of the building and so on. The temperature drop is sensed by means of the sensor 60, which administrated its indication to the apparatus 61 which is of the type shown in Fig. 4. By this, an incitement is transmitted to the motor 78 of the three way valve 58 for such readjustment of said valve, that a correction of the temperature of the warm water will take place in quick order and taking regard to the really existing drop of temperature as well as to any disturbing influences, perhaps occurring. Thereby, cold water is fed from the conduit 74 to one input of the three way valve 58, and also hot water from the water heater 55 to another input of same three way valve. Mixed water of correct temperature, thereafter, will be fed out to the warm water loop 54 by a third connection to the three way valve.

**Claims**

1. A control system for ensuring a sensed parameter is maintained at a constant value, or varies in accordance with a predetermined rule, comprising control means (17) to control the value of said parameter, the control means having a known transfer function, and a sensor (19, 60) providing an output related to the sensed parameter, the sensor (19, 60) supplying electric signals to an amplifier (20) forming part of the control system, characterized in that the amplifier (20) consists of one or more amplifier stages (25, 26) each having an inverting and a non-inverting input (27', 27'' and 28', 28'') with a respective feedback network connected to the non-inverting input (27'', 28'') of each amplifier stage from the output of that amplifier stage (25, 26), the feedback network comprising a filter (29, 30, 31, 32) arranged to given an overall transfer function through the amplifier (20) that is the inverse of the transfer function of the control means.

2. A control system according to claim 1 characterized in that, a plurality of amplifiers (25, 26) with feedback networks are connected in cascade and the feedback network of each amplifier is a filter (34, 35, 36, 37) selected to provide the inverse of the transfer function of one of the elements in the control system loop.

3. A control system according to claims 1 or 2 characterized in that, the feedback network includes a resistor (29) and a condenser (32) having values that ensure the amplifier has the desired transfer function.

4. A control system according to claim 3 characterized in that, a decoupling condenser (30) is connected in parallel with the resistor (29) in the feedback network and a damping resistor (31) is connected in series with the condenser (32) connected between the feedback input and earth.

5. A control system according to any of the preceding claims characterized in that, the condensers and/or resistors in the feed back networks may be varied in value be external means.

**Patentansprüche**

1. Regelsystem zur Gewährleistung, dass ein abgefühlter Parameter als konstanter Wert beibehalten wird oder gemäss einer vorbestimmten Revel sich ändert, mit Regelmitteln (17) zum Regeln des Wertes genannten Parameters, welche Mittel eine bekannte Ueberführungsfunktion besitzen, sowie mit einem Abfühlorgan (19, 60) zum Erzeugen eines dem abgefühlten Parameter entsprechenden Outputs, wobei das Abfühlorgan (19, 60) elektrische Signale an einen Verstärker (20) abgibt, welcher einen Teil des Regelsystems bildet, dadurch gekennzeichnet, dass der Verstärker (20) aus einer oder mehreren Verstärkerstufen (25, 26) besteht, von denen jede einen umwandelnden und einen nicht-umwandelnden Input (27', 27" und 28', 28") aufweist mit einem jeweiligen Rückkoppelungsnetzwerk angeschlossen an den nicht-umwandelnden Input (27", 28") jeder Verstärkerstufe vom Output dieser Verstärkerstufe (25, 26), und dass das Rückkoppelungsnetzwerk einen Filter (29, 30, 31, 32) besitzt, der zum Erhalt einer Gesamtübertragungsfunktion durch den Verstärker (20) vorgesehen ist, welche die umgekehrte der Uebertragungsfunktion der Regelmittel ist.

2. Regelsystem nach Anspruch 1, dadurch gekennzeichnet, dass eine Vielzahl von Verstärkern (25, 26) mit Rückkoppelungsnetzwerken in Kaskade angeschlossen ist, und dass das Rückkoppelungsnetzwerk jedes Verstärkers ein Filter (34, 35, 36, 37) ist, welcher ausgewählt ist, um die umgekehrte der Uebertragungsfunktion einer der Elemente in der Regelsystemschlinge zu liefern.

3. Regelsystem nach Anspruch 1 oder 2, dadurch gekennzeichnet, dass das Rükkoppelungsnetzwerk einen Widerstand (29) und einen Kondensator (32) einschliesst mit Werten, welche sicherstellen, dass der Verstärker die gewünschte Uebertragungsfunktion hat.

4. Regelsystem nach Anspruch 3, dadurch gekennzeichnet, dass ein Entkopplungskondensator (30) zu dem Widerstand (29) im Rückkoppelungsnetzwerk parallelgeschaltet ist, und dass ein Dämpfwiderstand (31) zwischen dem Rückkoppelungsinput und Erde mit dem Kondensator (32) in Serie geschaltet ist.

5. Regelsystem nach einem der vorhergehenden Ansprüche, dadurch gekennzeichnet, dass die Kondensatoren und/oder die Widerstände in den Rückkoppelungsnetzwerken im Wert durch äussere Mittel änderbar sind.

**Revendications**

1. Un système de commande pour assurer qu'un paramètre de détection soit maintenu à une valeur constante, ou varie selon une loi prédéterminée, comprenant des moyens de commande (17) pour commander la valeur dudit paramètre, les moyens de commande ayant une fonction connue de transfert, et un détecteur (19, 60) délivrant une sortie en relation avec le paramètre de détection, le détecteur (19, 60) fournissant des signaux électriques à un amplificateur (20) faisant partie du système de commande, caractérisé en ce que l'amplificateur (20) est formé d'un ou plus d'un étage amplificateur (25, 26), ayant chacun une entrée inverseuse et une entrée non-inverseuse (27', 27" et 28', 28") avec un circuit respectif de réaction relié à l'entrée non-inverseuse (27", 28") de chaque étage amplificateur depuis la sortie de cet étage amplificateur (25, 26), le circuit de réaction comportant un filtre (29, 30, 31, 32) agencé pour donner une fonction globale de transfert par l'intermédiaire de l'amplificateur (20), qui est l'inverse de la fonction de transfert des moyens de commande.

2. Un système de commande selon la revendication 1, caractérisé en ce qu'une pluralité d'amplificateurs (25, 26) possédant des circuits de réaction sont montés en cascade et en ce que le circuit de réaction de chaque amplificateur est un filtre (34, 35, 36, 37) choisi pour fournir l'inverse de la fonction de transfert d'un des éléments de la boucle du système de commande.

3. Un système de commande selon la revendication 1 ou 2, caractérisé en ce que le circuit de réaction comprend une résistance (29) et un condensateur (32) ayant des valeurs qui assurent que l'amplificateur présente la fonction de transfert désirée.

4. Un système de commande selon la revendication 3, caractérisé en ce qu'une condensateur de découplage (30) est monté en parallèle avec la résistance (29) dans le circuit de réaction et en ce qu'une résistance d'amortissement (31) est montée en série avec le condensateur (32) monté entre l'entrée de réaction et la masse.

5. Un système de commande selon l'une quelconque des revendications précédentes, caractérisé en ce que les condensateurs et/ou les résistances dans les circuits de réaction ont des valeurs que l'on peut faire varier par des moyens extérieurs.

FIG 1

FIG 2

FIG 3

FIG 6

FIG 4

FIG 5

2